# FASCICULE DE BREVET EUROPEEN

(11) **EP 1 974 623 B1**
(45) Date de publication et mention de la délivrance du brevet: **19.05.2010**
(21) Numéro de dépôt: 08290302.2
(22) Date de dépôt: 28.03.2008
(51) Int. Cl.: A41D 31/00

(54) **Complexe textile comprenant une couche liée par enchevêtrement dans laquelle est insérée une structure en relief**
Textilkomplex bestehend aus einer Schicht, in die eine Reliefstruktur durch Verknüpfung eingefügt ist
Textile laminate comprising an entangled layer in which a raised structure is inserted

(30) Priorité: 29.03.2007 FR 0702322
(43) Date de publication de la demande: 01.10.2008
(73) Titulaire: Alpex Protection, 42400 St. Chamond (FR)
(72) Inventeur: Dubourg, Hélène, 80200 Buire Courcelles (FR)
(74) Mandataire: Sayettat, Julien Christian

(56) Documents cités:
- EP-A- 0 365 491
- EP-A- 1 413 213
- WO-A-02/054896
- FR-A- 2 623 823
- FR-A- 2 842 077
- FR-A- 2 846 201
- FR-A- 2 846 202

## Description

L'invention concerne un complexe textile pour la réalisation d'un vêtement de protection thermique, ainsi qu'un tel vêtement de protection thermique.

L'invention s'applique notamment mais non exclusivement aux vêtements de protection contre le feu destinés aux pompiers, qui doivent assurer confort et sécurité.

Pour la réalisation de vêtements de protection thermique, il est connu d'utiliser un empilement de couches ayant différentes fonctions de sorte à obtenir les performances globales souhaitées pour lesdits vêtements. En outre, il est également connu de prévoir une inclusion d'air entre au moins deux couches textiles de sorte à améliorer la protection thermique conférée.

En particulier, l'empilement formant le vêtement doit présenter les caractéristiques suivantes qui, dans le cas des vêtements de protection pour sapeurs pompiers, font l'objet de la norme européenne EN 469 dans sa version de février 2006 :
- résister au feu;
- assurer une protection thermique afin de protéger l'individu de la chaleur ;
- présenter un faible retrait thermique ;
- être imperméable tout en permettant le passage de la vapeur d'eau - notamment de la sueur - depuis l'intérieur du vêtement vers le milieu extérieur.

Pour satisfaire à l'ensemble de ces caractéristiques, les complexes textiles proposés par l'art antérieur conduisent à une multiplication des couches, notamment indépendantes, ce qui va à l'encontre de la facilité de fabrication dudit complexe, des contraintes de confection du vêtement l'intégrant, ainsi que du confort d'utilisation dudit vêtement.

Les documents FR-2 846 201, FR-2 846 202 et EP-1 413 213 décrivent des textiles composites anti-feu imperméables comprenant une première couche textile à base de fibres thermostables, une deuxième couche comprenant une membrane imperméable à l'eau liquide et perméable à la vapeur d'eau, ininflammable et une troisième couche d'adhésif discontinue placée entre lesdites première et deuxième couches assurant la fixation de la deuxième couche sur la première couche, ladite deuxième couche étant agencée pour inclure un volume d'air.

L'invention vise notamment à perfectionner les complexes textiles existant en proposant un agencement particulièrement simple de fabrication et qui permet d'inclure un volume d'air de sorte à optimiser la protection thermique conférée.

A cet effet, et selon un premier aspect, l'invention propose un complexe textile pour la réalisation de vêtements de protection thermique, comprenant une première et une deuxième nappe de fibres, lesdites nappes étant associées l'une sur l'autre par enchevêtrement des fibres pour former une couche textile, ledit complexe comprenant en outre une structure en relief qui est interposée entre lesdites nappes pour être enrobée par elles, ladite structure étant agencée pour former un réseau en relief sur au moins l'une des faces externes de ladite couche.

Selon un deuxième aspect, l'invention propose un vêtement de protection thermique, comprenant au moins un tel complexe textile, dans lequel une couche textile extérieure ou intérieure est disposée en regard du réseau en relief, de sorte à inclure un volume d'air entre ladite couche et ledit complexe.

D'autres particularités et avantages de l'invention apparaîtront dans la description qui suit, faite en référence à la figure annexée qui schématise de façon éclatée la structure d'un complexe textile selon un mode de réalisation de l'invention.

L'invention concerne un complexe textile de protection thermique, c'est-à-dire notamment un complexe textile qui confère une protection contre la chaleur et contre les flammes. Ce type de complexes textiles est en particulier utilisé pour confectionner des vêtements de protection pour les pompiers, ou plus généralement pour des personnels ayant à intervenir dans un environnement dans lequel il existe des risques de brûlures liés à une exposition brève et involontaire à la chaleur et/ou aux flammes.

Le complexe textile comprend une première et une deuxième nappe 1, 2 de fibres qui sont associées l'une sur l'autre par enchevêtrement des fibres pour former une couche textile. Dans un exemple de réalisation, chaque nappe de fibres 1, 2 est formée d'au moins un voile de fibres cardées et l'enchevêtrement est réalisé par liage jets d'eau desdites nappes (spunlaced en anglais). En effet, on obtient ainsi de façon connue une couche textile non tissée dont le liage est assuré mécaniquement par le passage des jets d'eau au travers d'elle.

Selon une réalisation, les nappes de fibres 1, 2 peuvent être identiques, notamment relativement à leur composition et à leur poids. Selon une autre réalisation, les nappes de fibres 1, 2 peuvent avoir une composition, un poids et/ou une structure différente de sorte à obtenir une couche textile dont chacune des faces externes présente des propriétés différentes.

En particulier, selon les spécificités mécaniques, notamment relativement à la résistance ou à l'allongement, on peut utiliser une première nappe 1 de non tissé dans laquelle les fibres ont tendance à être alignées toutes dans le même sens, et une deuxième nappe 2 de non tissé dans laquelle les fibres sont réparties au hasard ou de façon perpendiculaire entre elles.

En outre, en fonction des besoins spécifiques de l'application, les nappes 1, 2 peuvent comprendre un mélange de fibres différents, notamment relativement à leur titre, leur longueur et/ou leur composition.

En particulier, les fibres peuvent être à base de matériau thermostable, tel qu'un matériau polymérique choisi dans le groupe comprenant les para aramides, les méta aramides, les polybenzimidazole-imides, les polybenzooxazoles, les polyacrylates, les polyphénols, les polyamide-imides, les poly-p-phénylènediamine-terephtalamides (PPTA ou M5).

Les fibres peuvent comprendre un mélange de ces matériaux, en particulier un mélange de méta aramide et de para aramide. En outre, il est également envisageable d'utiliser un mélange de matériau thermostable et de matériau ignifugé, notamment tel que décrit dans les documents EP-1 386 987 et EP-1 386 988.

Par ailleurs, les fibres utilisées peuvent présenter des caractéristiques avantageuses en termes de transfert de chaleur et/ou d'humidité.

Le complexe textile comprend en outre une structure en relief 3 qui est interposée entre les nappes 1, 2 pour être enrobée par elles, ladite structure étant agencée pour former un réseau en relief sur au moins une, notamment les deux, face externe de ladite couche. Le complexe textile combine donc, en une seule couche, les propriétés d'un non tissé lié par enchevêtrement et d'une structure en relief 3 permettant l'inclusion d'un volume d'air de protection thermique.

En particulier, la structure en relief 3 présente des ouvertures 4 au travers desquelles l'enchevêtrement des fibres est réalisé, et des zones en surépaisseur qui sont enrobées entre chacune des nappes 1, 2. L'enchevêtrement des fibres de chacune des nappes 1, 2 peut ou non être réalisé au travers des zones en surépaisseur, et des fibres de chacune des nappes 1, 2 peuvent être liées auxdites zones en surépaisseur par enchevêtrement.

Dans un exemple de réalisation, la structure en relief 3 comprend des bourrelets 5 dont l'épaisseur est suffisante pour former le réseau en relief par introduction de surépaisseurs localisées dans la couche. En outre, les bourrelets 5 présentent une compressibilité limitée, notamment relativement aux pressions induites lors de l'enchevêtrement, afin de conserver leur épaisseur une fois enrobés entre les nappes 1, 2. En particulier, les bourrelets 5 peuvent être formés de fils de gros titrage, ou de l'association de plusieurs fils entre eux, par exemple sous la forme d'un câble, d'une tresse ou d'une corde.

Les bourrelets 5 peuvent être réalisés à partir d'un matériau analogue à celui formant les fibres des nappes 1, 2, notamment thermostable, ou spécifique auxdits bourrelets. Il est ainsi possible de bénéficier d'une structure en relief 3 en matériau thermostable de sorte qu'elle conserve sa forme même en cas d'exposition à une chaleur importante. Les bourrelets 5 peuvent également contenir des matériaux à mémoire de forme ou à changement de phase dans une plage de températures déterminée, de sorte à conférer ces propriétés à la couche textile.

Selon une réalisation, les bourrelets 5 s'étendent suivant une direction et sont espacés suivant l'autre direction de sorte à former entre eux un réseau de canaux sur la face externe de la couche.

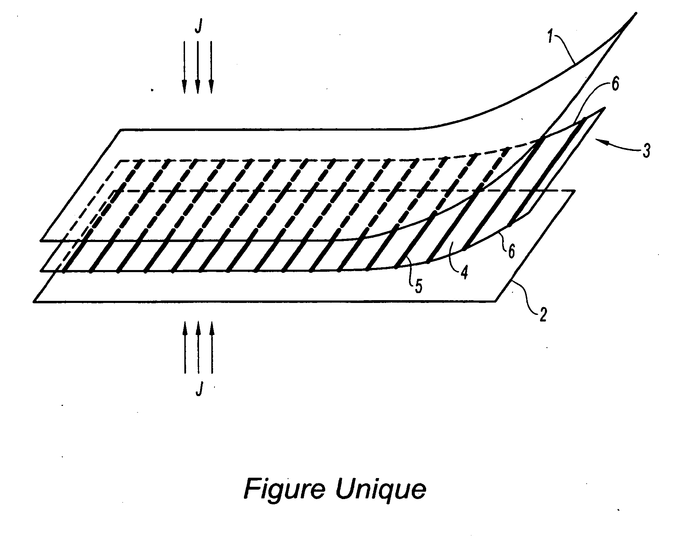

Sur la figure 1, les bourrelets 6 s'étendent suivant une direction transversale par rapport au sens de défilement des nappes sous les jets d'eau J, lesdits bourrelets étant espacés suivant la direction longitudinale de défilement. Cette réalisation permet en outre de renforcer mécaniquement la couche dans la direction transversale qui, dans une couche non tissée liée par jets d'eau, est classiquement la direction de faiblesse puisque les impacts des jets d'eau s'étendent longitudinalement. Toutefois, en variante, les bourrelets 5 peuvent s'étendre longitudinalement et être espacés transversalement.

Selon une réalisation, la structure en relief 5 comprend eu outre des fils de liaison 6 des bourrelets 5 entre eux, de sorte notamment à faciliter la disposition des bourrelets 5 entre les nappes 1, 2 en vue de leur liage. En particulier, on peut prévoir des fils de liaison 6 en matériau hydrosoluble, notamment en PVA (alcool polyvinylique), afin d'assurer leur résorption lors du liage par jets d'eau en vue d'un gain de poids pour le complexe. Sur la figure 1, deux fils 6 sont prévus pour lier respectivement chacune des extrémités des bourrelets 5.

Selon une réalisation, la structure en relief 3 comprend des bourrelets 5 transversaux et des bourrelets longitudinaux qui sont associés entre eux de sorte à former un réseau de poches sur la face externe de la couche. Les bourrelets transversaux et longitudinaux peuvent être de nature identique ou différente, et être associé sous la forme d'une grille qui est disposée entre les nappes 1, 2 préalablement à leur liage.

Bien entendu, le complexe textile suivant l'invention peut comprendre éventuellement d'autres couches solidaires de la couche textile décrite ci-dessus. En particulier, ces couches peuvent remplir des fonctions supplémentaires de protection thermique ou d'autres fonctions. Dans une réalisation, le complexe textile comprend en outre une membrane imperméable à l'eau liquide et perméable à la vapeur d'eau, par exemple microporeuse ou hydrophile, de sorte à lui conférer des caractéristiques de respirabilité. Pour ce faire, la membrane est associée sur une face externe de la couche, par exemple par contrecollage au moyen d'un réseau discret de points d'adhésif.

Le complexe peut comprendre une deuxième couche textile qui est associée à l'autre couche en regard du réseau en relief, de sorte à inclure un volume d'air entre lesdites couches. Par exemple, les couches peuvent être montées flottante l'une par rapport à l'autre ou être associées par matelassage. Ainsi, du fait de la présence du réseau en relief, il se forme un espace entre les couches textiles, dans lequel un volume d'air de protection thermique est inclus.

L'invention concerne également un vêtement de protection comprenant au moins un complexe textile tel que décrit ci-dessus. Selon les méthodes de confection connues de l'homme du métier, le vêtement comprend une couche textile extérieure et une couche textile intérieure, une de ces couches étant disposée en regard du réseau en relief de sorte à inclure un volume d'air entre ladite couche et ledit complexe. Dans le cas où le réseau en relief forme des canaux, il peut être souhaitable de les orienter horizontalement de sorte à favoriser la circulation d'air par convection dans lesdits canaux.

## Revendications

1. Complexe textile pour la réalisation de vêtements de protection thermique, comprenant une première et une deuxième nappe de fibres (1, 2), lesdites nappes étant associées l'une sur l'autre par enchevêtrement des fibres pour former une couche textile, ledit complexe étant **caractérisé en ce qu'**il comprend en outre une structure en relief (3) qui est interposée entre lesdites nappes pour être enrobée par elles, ladite structure étant agencée pour former un réseau en relief sur au moins l'une des faces externes de ladite couche.

2. Complexe textile selon la revendication 1, **caractérisé en ce que** la structure en relief (3) comprend des bourrelets (5) s'étendant suivant une direction - transversale ou longitudinale - lesdits bourrelets étant espacés suivant l'autre direction - longitudinale ou transversale - de sorte à former entre eux un réseau de canaux sur la face externe de la couche.

3. Complexe textile selon la revendication 2, **caractérisé en ce que** la structure en relief (3) comprend en outre des fils de liaison (6) des bourrelets (5) entre eux.

4. Complexe textile selon la revendication 2, **caractérisé en ce que** la structure en relief (3) comprend des bourrelets transversaux (5) et des bourrelets longitudinaux qui sont associés entre eux de sorte à former un réseau de poches sur la face externe de la couche.

5. Complexe textile selon l'une quelconque des revendications 2 à 4, **caractérisé en ce qu'**un bourrelet (5) est formé d'un fil de gros titrage ou de l'association de plusieurs fils.

6. Complexe textile selon l'une quelconque des revendications 1 à 5, **caractérisé en ce que** chaque nappe (1, 2) est formée d'au moins un voile de fibres cardées, l'enchevêtrement étant réalisé par un liage par jets d'eau desdites nappes.

7. Complexe textile selon l'une quelconque des revendications 1 à 6, **caractérisé en ce que** les fibres et/ou la structure en relief (3) sont à base de matériau thermostable.

8. Complexe textile selon l'une quelconque des revendications 1 à 7, **caractérisé en ce qu'**il comprend en outre une membrane imperméable à l'eau liquide et perméable à la vapeur d'eau, ladite membrane étant associée sur une face externe de la couche.

9. Complexe textile selon l'une quelconque des revendications 1 à 8, **caractérisé en ce qu'**il comprend une deuxième couche textile, ladite deuxième couche étant associée à l'autre couche en regard du réseau en relief, de sorte à inclure un volume d'air entre lesdites couches.

10. Vêtement de protection thermique, comprenant au moins un complexe textile selon l'une quelconque des revendications 1 à 9, dans lequel une couche textile extérieure ou intérieure est disposée en regard du réseau en relief, de sorte à inclure un volume d'air entre ladite couche et ledit complexe.

## Claims

1. Textile complex for making clothes for protection against heat, comprising a first and a second fibre lap (1, 2), said laps being associated one on the other by fibre entanglement in order to form a textile layer, said complex being **characterised in that** it further comprises a relief structure (3) which is interposed between said laps in order to be covered by them, said structure being arranged in order to form a relief network on at least one of the external faces of said layer.

2. Textile complex according to claim 1, **characterised in that** the relief structure (3) comprises folds (5) extending along a transversal or longitudinal direction - said folds being spaced according to the other direction - longitudinal or transversal - in such a way as to form between them a network of channels on the external face of the layer.

3. Textile complex according to claim 2, **characterised in that** the relief structure (3) further comprises bonding yarns (6) of the folds (5) together.

4. Textile complex according to claim 2, **characterised in that** the relief structure (3) comprises transversal folds (5) and longitudinal folds which are associated together in such a way as to form a network of pockets on the external face of the layer.

5. Textile complex according to any of claims 2 to 4,
**characterised in that** a fold (5) is formed from a high thread count yarn or from the association of several yarns.

6. Textile complex according to any of claims 1 to 5,
**characterised in that** each lap (1, 2) is formed of at least one voile fabric of woollen fibres, the entanglement being carried out by a bonding via water jets of said laps.

7. Textile complex according to any of claims 1 to 6,
**characterised in that** the fibres and/or the relief structure (3) are of a thermostable material base.

8. Textile complex according to any of claims 1 to 7,
**characterised in that** it further comprises a membrane sealed against liquid water and permeable to water vapour, said membrane being associated on an external face of the layer.

9. Textile complex according to any of claims 1 to 8,
**characterised in that** it comprises a second textile layer, said second layer being associated to the other layer across from the relief network, in such a way as to include a volume of air between said layers.

10. Clothing for protection against heat, comprising at least one textile complex according to any of claims 1 to 9, wherein an exterior or interior textile layer is arranged across from the relief network, in such a way as to include a volume of air between said layer and said complex.

## Patentansprüche

1. Textilkomplex zum Herstellen von Wärmeschutzkleidung, umfassend eine erste und eine zweite Faserlage (1, 2), wobei die Lagen aufeinander durch Verwickeln der Fasern verbunden sind, um eine Textilschicht zu bilden, wobei der Komplex **dadurch gekennzeichnet ist, dass** er ferner eine Reliefstruktur (3) umfasst, die zwischen den Lagen eingeschoben ist, um von diesen umhüllt zu werden, wobei die Struktur angeordnet ist, um ein Reliefnetz mindestens auf einer der Außenseiten der Schicht zu bilden.

2. Textilkomplex nach Anspruch 1, **dadurch gekennzeichnet, dass** die Reliefstruktur (3) Wülste (5) umfasst, die sich in einer Richtung - quer oder längs - erstrecken, wobei die Wülste in der anderen Richtung - längs oder quer - beabstandet sind, um untereinander ein Kanalnetz auf der Außenseite der Schicht zu bilden.

3. Textilkomplex nach Anspruch 2, **dadurch gekennzeichnet, dass** die Reliefstruktur (3) ferner Verbindungsfäden (6) der Wülste (5) untereinander umfasst.

4. Textilkomplex nach Anspruch 2, **dadurch gekennzeichnet, dass** die Reliefstruktur (3) Querwülste (5) und Längswülste, die untereinander verbunden sind, um ein Taschennetz auf der Außenseite der Schicht zu bilden, umfasst.

5. Textilkomplex nach einem der Ansprüche 2 bis 4, **dadurch gekennzeichnet, dass** eine Wulst (5) aus einem Faden mit großem Durchmesser oder aus der Verbindung von mehreren Fäden gebildet wird.

6. Textilkomplex nach einem der Ansprüche 1 bis 5, **dadurch gekennzeichnet, dass** jede Lage (1, 2) aus mindestens einem Kardenvlies gebildet ist, wobei die Verwicklung durch eine Wasserstrahlbindung der Lagen ausgeführt wird.

7. Textilkomplex nach einem der Ansprüche 1 bis 6, **dadurch gekennzeichnet, dass** die Fasern und/oder die Reliefstruktur (3) auf einem wärmebeständigen Material basieren.

8. Textilkomplex nach einem der Ansprüche 1 bis 7, **dadurch gekennzeichnet, dass** er ferner eine für flüssiges Wasser undurchlässige und für Wasserdampf durchlässige Membran umfasst, wobei die Membran auf einer Außenseite der Schicht verbunden ist.

9. Textilkomplex nach einem der Ansprüche 1 bis 8, **dadurch gekennzeichnet, dass** er eine zweite Textilschicht umfasst, wobei die zweite Schicht mit der anderen Schicht gegenüber dem Reliefnetz verbunden ist, so dass sie ein Luftvolumen zwischen den Schichten umfasst.

10. Wärmeschutzkleidungsstück, umfassend mindestens einen Textilkomplex nach einem der Ansprüche 1 bis 9, wobei eine äußere oder innere Textilschicht gegenüber dem Reliefnetz angeordnet ist, um ein Luftvolumen zwischen der Schicht und dem Komplex zu umfassen.
